# EUROPEAN PATENT APPLICATION

(11) **EP 1 391 816 A1**
(43) Date of publication of application: **25.02.2004**
(21) Application number: 02405718.4
(22) Date of filing: 23.08.2002
(51) Int. Cl.: G06F 9/44

(54) **Method and system for registering aspect implementations**

(71) Applicant: ABB RESEARCH LTD., 8050 Zürich (CH)
(72) Inventor: Naedele, Martin, 8048 Zürich (CH); Vetter, Claus, 5405 Baden-Dättwil (CH); Werner, Thomas, 5404 Baden (CH)
(74) Representative: ABB Patent Attorneys

(57) **Abstract**

The invention is directed to a method for recognising an availability of aspect implementations in a software system comprising at least one aspect object structure comprising a plurality of aspect objects and providing a description of the dependencies between real world objects represented by the aspect objects, each being of a particular object type including at least one aspect, being of a particular aspect type, said method comprising the following steps to be performed upon a condition: -identifying all aspect types of aspects included in objects contained in the aspect object structure; -determining which aspect implementations referenced by all found aspect type are available in the software system; -registering those aspect types, for which aspect implementations are available, with a registry. The invention is also to a system for performing the method.

## Description

### Technical field of the invention

The present invention relates to a method for registering aspects having aspect implementations in a structure comprising a plurality of aspect objects.

### State of the art

The present invention is concerned with computerised systems relating to real world objects. An example for a computerised system in the meaning of the present invention is a computerised system for control which may be used for controlling a number of single devices, an object in a process, a complete equipment in any location including plants, homes, or other facilities, as well as a process or an industrial installation such as a steel mill, a paper mill, or an automated factory. Particularly, the invention helps in integrating many and varied types of information within a computerised system.

Two general themes in the operation of complex systems such as industrial plants as well as management systems are information availability and information integration. I.e., information must be available at the right place and at the right time, independent of where the information comes from. This results in several requirements. First, it must be possible to seamlessly integrate information from a variety of existing sources. Secondly, it must be possible to integrate new sources of information, such as applications with a certain functionality, in a straightforward way, without having to undergo lengthy and difficult efforts of updating and modifying the existing system to include these new applications.

Particularly in plant operations as well as asset lifecycle management, there is a central problem in keeping together, managing, and accessing information about a large number of plant and process entities. These entities or real world objects, are of many different kinds. They can be physical process objects, like a valve, or more complex, like a reactor. Other examples are products, material, batches, manufacturing orders, customer accounts, etc.

An example of such a system for information and control integration is the ABB Aspect Integrator Platform (AIP). The AIP is an information integration platform based on the notion of objects as access points to information retrieval. Associated with each object (aspect object) are different kinds of information (aspects) and information processing programming code (aspect implementations) associated with these aspects to provide information or execute behaviour. Each aspect object is of a certain object type and part of this type definition is a set of aspects associated with the aspect object and in consequence, the set of aspect implementations required for implementing these aspects.

Throughout the specification of this invention, the following definitions shall apply to the terms used in connection with the description of the systems.

Real world object: any entity having either a physical shape or a logical entity and exhibiting at least one behaviour, with which a representation/control system should interact. Examples may be (in particular in the context of plant management) machines, engines, pipelines, valves, computers, computer programs, customer accounts, manufacturing orders, etc.

Software object (object): a programming construct as well known in the field of object oriented programming.

Object type: An abstract definition of objects of a certain kind, i.e. of objects sharing the same methods and the same data structures. When programming, a "class" holding the object type definition is "instantiated" to create concrete objects. An object type may e.g. be a program window or a logical representation of valves, while an object is a particular program window or a representation of e.g. one particular valve.

Aspect: a facet of a real world object; a logical/systematic point of view of looking at a real world object. In other words, an aspect is a mathematical subset of all the information and behaviour associated with a real world object. The term is used in a bipartite manner. One portion of an aspect is the concept as such for the real world object; while the other portion concerns how the aspect is represented within aspect objects.

Aspect object: similar to a software object, this is a construct comprising at least one aspect for a real world object. It is a representation for real world objects, the aspects of which are "contained" in the aspect object. Software wise, an aspect object is a container of references to aspect implementations. In contrast to a classical software object, it does not directly contain data and methods, but rather partitions those into its aspects. It may be implemented using e.g. object oriented technologies, or component technology like COM or .NET.

Aspect type: an abstract definition of aspects of a certain kind, similar to an object class of classical Object oriented programming in that the term refers to abstract definitions (similar to an object type), but also to references to aspect implementations (similar to the object implementation also contained in an object class). It does not contain, but references the implementation of the functionality of a certain aspect. Examples for aspect types are the location of a real world object, its functionality, its status, its maintenance status, its user manual etc. Software wise, the aspect type contains binding information between an aspect and its aspect implementation.

Aspect implementation: a programming construct implementing a certain aspect or a group of aspects. It may either be a specially written code, or may be a pre-existing program, which is "wrapped" by a so called aspect system object, in order to make it accessible to the system. An aspect implementation may e.g. a program for determining and/or setting the status of a valve, a web browser displaying operating manuals for a machine, a mail client able to order spare parts for a machine, or a program for logging maintenance work on a machine. An aspect implementation may also be an object/group of objects in a program, or a component, like a COM component.

Aspect framework: a runtime environment for aspect implementations and aspect objects.

Aspect directory: included in the aspect framework, the aspect directory holds all information on all relations among the above components of the system.

Aspect object structure: an organisation (preferably a hierarchical tree organisation) of aspect objects providing a description of the dependencies between real world objects. An aspect object can exist in multiple structures. Examples for structures are functional and location structures.

Software system: A collection of all aspect objects and their aspects, structures, and aspect implementations including an aspect framework, for implementing a real world system consisting of a plurality of real world objects.

In order to avoid ever and ever again re-implementing the same object types all over ABB, especially for common aspect objects like "company", "location", "person", "order", "device", "valve" etc., an ABB wide aspect object type library is desirable. For this global type library, each object type will be designed with regard to reusability in as many different contexts as possible, i.e. with any many aspects and aspect implementations as necessary for these contexts.

A dedicated system will be built by taking the AIP, a set of object types relevant for that system, and a set of aspect implementations appropriate for implementing the aspects of the object types, and relevant to the system. The aspect implementations are sold, therefore it is desirable for a customer to only buy those aspect implementations needed for the purpose of the system.

The AIP, as described in patent application XXX and others, is the sole information integration platform using aspect objects, aspects and aspect implementations as described above. All objects delivered for AIP compliant systems presently contain information on all possible aspects of real world objects, including references to their aspect types (which in turn contain references to the aspect implementations). However, not all aspect implementations for these aspects are inevitably included in the delivery of a particular system. The implementations are sold separately, in order to give the customers the opportunity to avoid (and hence not have to pay for) those implementations they do not need.

In the current incarnation of the AIP, all aspects of an object type will be displayed within a structure browser for displaying the structure of the system and its objects, irrespective of whether or not there is an implementation present in the system. Such a structure browser functions as the primary interface for user interaction and allows for the invocation and use of the aspect implementations, which are available in a particular system. The browser allows a user to browse through the structure comprising the aspect objects. The user is then able to select particular objects (e.g. a valve, or a user account), which in turn instructs the browser to display the aspects of the aspect object. Upon selection of a particular aspect within the aspect object, the browser tries to invoke the aspect implementation associated with the aspect. This will generally be a program, which is able to fulfil the functionality of the aspect, working on the data provided e.g. by the particular aspect object. A substantial problem with the present approach resides in that, if an aspect is selected for which no aspect implementation is available, an error is returned, and an according error message will be displayed by the browser (or via the aspect object).

In order to avoid such error messages, and the user confusion caused by them, there is a need to know for which aspects of an aspect object, there are aspect implementations available in a particular system.

### Description of the invention

This problem is solved by the method according to independent claim 1 and the software system according to independent claim 8. Further advantages, aspect and details of the invention will become more readily apparent from the dependent claims, and the description.

It will be understood that while in the forgoing, the problems associated with ABB's AIP have been presented, the invention should not be limited to AIP, but is well applicable to all systems alike, using aspects or other object references within object oriented or component oriented programming, in which a reference within an object might point nowhere, due to a missing implementation for the program, to which the aspect or object reference references.

First, the invention is directed to a method for recognising an availability of aspect implementations in a software system comprising at least one aspect object structure comprising a plurality of aspect objects and providing a description of the dependencies between real world objects represented by the aspect objects, each being of a particular object type including at least one aspect, being of a particular aspect type, said method comprising the following steps to be performed upon a condition:
- identifying all aspect types of aspects included in objects contained in the aspect object structure;
- determining which aspect implementations referenced by all found aspect type are available in the software system;
- registering those aspect types, for which aspect implementations are available, with a registry.
   The terms used in defining the invention are as given above. Shortly, it should be noted that each aspect object
- belongs to a specific object type; and
- "contains" at least on aspect,
   while each aspect contained in the aspect object
- belongs to a specific aspect type;
- is referenced either in the object type, or directly in the aspect object.

First, all aspect types which are contained in the structure (and would conventionally be displayed to the user via a structure browser) are identified. For this purpose, the objects of the structure (containing the aspects) must be looked at. Then, it is checked whether or not these aspect types have implementations associated with them, which are contained in the system. Finally, the aspect types for which aspect implementations have been found, are registered (possibly together with information concerning to which object type/objects/aspects they belong).

Through the inventive method, an entirely new information about the software system can be gained, which can afterwards be used in several manners.

Preferably, the identification step comprises the following steps:
- finding all object types for all aspect objects contained in the aspect object structure;
- finding all aspect types referenced from within the object types of said aspect objects and/or all aspect types referenced directly from aspect objects.

This two step approach allows for easy identification of aspect types for which aspect implementations are available, by using existing structures of the system (aspect objects, aspect types, and aspects and references contained in them). The aspect objects may initially be found by inquiring of the aspect directory, which maintains information on the aspect objects of a software system. The aspect objects may e.g. be checked by invoking a function of the aspect objects which returns designations of the aspects contained therein. Alternatively, the object type of the aspect object may be determined (by invoking a different function), and then, the object type may be checked for its aspects.

Next, the aspects are checked for their aspect types in quite the same manner. For those aspects contained in aspect objects, which are not referenced in an object type, but have been referenced directly in the aspect object, determining the aspect type may simply be done by following the reference from the aspect to its aspect type.

The registry used for registering which aspect types have actual aspect implementations available, preferably is part of an aspect directory of the software system. This allows for the use of existing services of the software system, i.e. the aspect framework.

Preferably, the aspect directory comprises an object table for entries for the object types, and the registry for the aspect types comprises an aspect table for each object type. In this way, one table is generated containing information on all the object types presently used in the software system/structure, while a plurality of tables (one for every object type) is generated containing information on the aspect types contained in each of the object types. When using tables connected to object types, there is a problem in handling those aspects, which are directly referenced in an aspect object, and not via the object type of the aspect object to which they belong. As a solution to this, a proxy object type may be created on the fly, for which an object table may then be generated. These tables may either be part of the aspect directory, and hence be administered by the directory, or may be set up specifically for use with the inventive method.
As outlined above, the registry may contain only information on those aspect types, for which an aspect implementation is available. However, in an alternative approach, the registry may contain entries for all aspect types; and said registering of those aspect types for which aspect implementations are available, is performed by setting flags correlated with the respective entries of the aspect types in the registry. Through the use of flags, existing services of the aspect directory, albeit modified, may be used. Instead of creating whole new registries, only flags need to be added to the existing system. This approach may also be implemented by using the aspect directory of the system, instead of a special registry.

The method is required to be executed upon a condition, i.e. it will be executed when a specific condition is fulfilled. Several options exist for when such a condition exists, depending on the implementation of the whole system, and examples for such conditions are start-up, the passing of regular time intervals, the schedule of a user request and/or installation of system add-ons. The method can hence be scheduled with existing services on operating system level or on software system level.

The method according to the invention described so far has resulted in the provision of a gathered information on the present status of available aspect implementations within the software system. This information can be used in a variety of manners, e.g. for modifying display input to a structure browser. In one preferred embodiment, the invention comprises the additional step:
- making available for displaying by a structure browser information on those aspect objects and those aspects of said aspect objects, where an aspect implementation has been found for the aspect types of said aspect objects. In this embodiment, the structure browser (which is generally used as a user interface to the structure of the software system) or its environment will be changed in a way that it no longer accesses the aspect objects and the aspect directory directly, but instead, uses the information provided by the inventive method, e.g. as stored in the registry. Thus, only those aspect objects and their respective aspects are shown, for which an aspect implementation is in fact available.

Alternatively, the modified structure browser could use the conventionally available information, but supplement it with the information obtained with the inventive method. Then, the browser would be able to display all the aspect objects and aspects, but still would have the opportunity to distinguish between aspects, for which aspect implementations implementing their aspect type, are available, from those for which no aspect implementations are available. The browser could then e.g. highlight the usable aspects, gray out unusable aspects, or start some action when an unusable aspect is nevertheless selected. Such an action could e.g. be an advertisement, indicating where to obtain the missing aspect implementation, and might even include referring to a web site etc. for on-line purchase.

The invention is further directed to a system. All that as said with respect to the method also applies to the system, and vice versa, so that mutual reference is made.

The inventive system comprises at least one aspect object structure comprising a plurality of aspect objects and providing a description of the dependencies between real world objects represented by the aspect objects, each being of a particular object type and including at least one aspect, being of a particular aspect type, and is characterised by identification means for identifying all aspect types of aspects included in object types of objects contained in the aspect object structure;
determination means for determining which aspect implementations referenced by all found aspect type are available in the software system; and
registering means for registering those aspect types, for which aspect implementations are available, with a registry.

The identification means may comprise:
means for finding all object types for all aspect objects contained in the aspect object structure; and
means for finding all aspect types referenced from within the object types of said aspect objects.

As already mentioned with regard to the inventive method, the registry is preferably part of an aspect directory of the software system.

Preferably, the aspect directory comprises an object table for entries for the object types, and the registry for the aspect types comprises an aspect table for each object type.

The system may further comprise a structure browser for displaying those aspect objects and those aspects of said aspect objects registered with the aspect directory. The browser may also be adapted to display all aspects and aspect objects, but distinguish between aspects for which aspect implementations are available in the systems, and those, for which no aspect implementations are available.

In general, the system according to the invention will be a computer program product, the components of which may be loaded at least in part into the main memory of a digital data processing device, and be executed on said digital data processing device. The device may be a mainframe computer, a workstation or a PC connected to the overall hardware system implementing the functionality of the software system. It may run on the same computer as the browser or the aspect directory/framework, or on a different one.

In the following, the invention will be further explained by way of examples, schematically showing further details.

It is desirable that the non-existence of particular aspect implementations in the software system that are not relevant for the particular system is transparent to the user. In addition, an aspect may rely on other aspects to work (e.g., a "Trend Display" aspect may rely on an OPC Server aspect). These so-called crosslookups support the user when inserting new aspects.

The present invention provides a software architecture, mechanism and feature set for handling non-availability of certain aspect implementations. This is achieved by first identifying all aspect types which are used in a particular system, i.e. its browsable structure(s), and then, determining for which of these aspect types there are aspect implementations.

The information gained through the inventive method may be used in a variety of ways. One of these ways is to simply not display those aspects of an aspect object of a certain object type for which the aspect implementations are not available. Nevertheless, the reference to the aspect implementation is kept along with the object until it becomes valid the moment the aspect system is available.

Alternatively, the aspects of an aspect object of a certain object type for which the aspect implementations are not available, may well be displayed, but be grayed out, and not selectable. These aspects could even be made selectable by a user, but in contrast to the state of the art, where an error will be output after access to the aspect implementation for that aspect has failed, the user will instead be informed that no implementation is available for that aspect. The user might then be pointed to a way of purchasing the required aspect implementation, optionally including means directing him or her to an online store, where the aspect implementation might be purchased.

### Ways to practising the invention

As an example to further explain the present invention, lets assume that an object type "Valve" may have, among others, an aspect "control algorithm" with an associated aspect implementation "control algorithm editor"; and a further aspect "maintenance history" with an associated aspect implementation "maintenance record editor". A customer wants to build a maintenance management system for his production facility, based on an aspect based software system as outlined above, like ABB's AIP, for which they use, among other object types, the generic valve object type. However, in the context of maintenance management, the customer is not interested in the control algorithm of the valve and hence, dos not want to spend money on adding the control algorithm editor aspect implementation to the planned system. The customer wants his system to appear (at least on the structure browser) as if the valve object type includes only maintenance related information. This requirement can be handled by the inventive system automatically.

Later on, the customer may decide to extend the system so that it now also handles control programming. For that purpose, they purchase the control algorithm editor aspect implementation and add it to the system. Upon starting the system next time, the inventive method is run automatically, and the previously hidden control algorithm aspect of all the valves in the system become visible/selectable and may be accessed via the new control algorithm editor aspect system.

As an example for a possible implementation of the inventive method and system, the following is given.

Upon any of the conditions:
- system start-up;
- the passing of a regular time interval; and/or
- by user request,
- installation of system add-ons,
the following procedure is run:

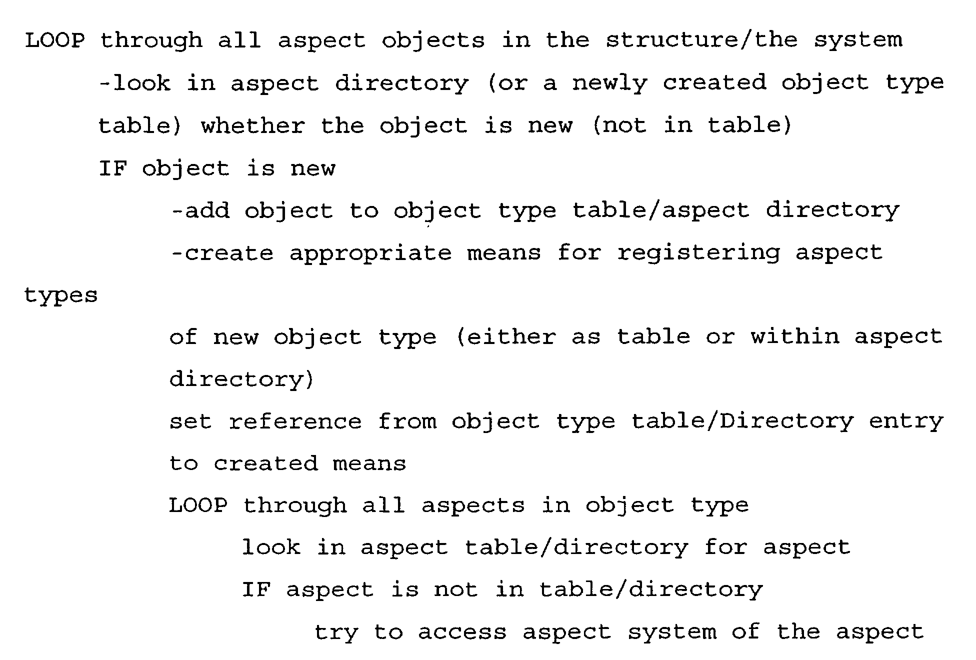

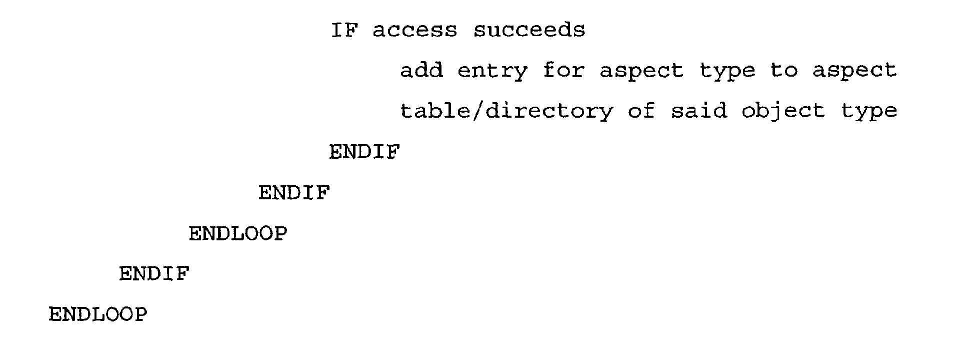

The overall system is changed accordingly, in order to allow that not the aspects defined in the object type definition, but those referenced in the object type's current aspect table/directory are used.

The algorithm above describes just one simple, sufficient, but not necessarily efficient implementation of the invented feature. The person skilled in the art of object oriented programming will readily be able to find and use alternative ways for implementing the inventive concept.

Integrating systems for managing plants or other facilities become increasingly important and attractive in the light of ever increasing data processing capabilities. Customer acceptance of such systems is of high importance and so is the protection of intellectual property related to usable features competitors ma want to use to gain marketing advantages. The present invention covers one important usability feature, which is focussed on the ability to leverage a standard library of object types to build dedicated systems based on the notion of aspect objects.

A computer program according to the invention is loadable into an internal memory of a digital computer, and comprises computer program code means to make, when said computer program code means is loaded in the computer, the computer execute the method according to the invention. In a preferred embodiment of the invention, a computer program product comprises a computer readable medium, having the computer program code means recorded thereon.

The system or an apparatus according to the invention preferably comprises a data processor, a memory coupled to the processor and computer program code means stored in said memory, where said computer program code means, when executed by the processor, causes the method according to the invention to be executed.

## Claims

1. A method for recognising an availability of aspect implementations in a software system comprising at least one aspect object structure comprising a plurality of aspect objects and providing a description of the dependencies between real world objects represented by the aspect objects, each being of a particular object type including at least one aspect, being of a particular aspect type, said method comprising the following steps to be performed upon a condition:
- identifying all aspect types of aspects included in aspect objects contained in the aspect object structure;
- determining which aspect implementations referenced by all found aspect type are available in the software system;
- registering those aspect types, for which aspect implementations are available, with a registry.

2. Method according to claim 1, **characterised in that** the identification step comprises the following steps:
- finding all object types for all aspect objects contained in the aspect object structure;
- finding all aspect types referenced from within the object types of said aspect objects, and/or all aspect types referenced directly from aspect objects.

3. Method according to claim 1 or 2, **characterised in that** the registry is part of an aspect directory of the software system.

4. Method according to claim 3, **characterised in that** the aspect directory comprises an object table for entries for the object types, and the registry for the aspect types comprises an aspect table for each object type.

5. Method according to claim 3, **characterised in that** the registry contains entries for all aspect types and said registering of those aspect types, for which aspect implementations are available, is performed by setting flags correlated with the respective entries of the aspect types in the registry.

6. Method according to any of claims 1 to 5, **characterised in that** the condition is system start-up, the end of regular time intervals, the schedule of a user request and/or installation of system add-ons.

7. Method according to any of claims 1 to 6, **characterised by** the further step:
- making available for displaying by a structure browser information on those aspect objects and those aspects of said aspect objects, where an aspect implementation has been found for the aspect types of said aspect objects.

8. System, comprising at least one aspect object structure comprising a plurality of aspect objects and providing a description of the dependencies between real world objects represented by the aspect objects, each being of a particular object type and including at least one aspect, being of a particular aspect type, **characterised by**
identification means for identifying all aspect types of aspects included in object types of objects contained in the aspect object structure;
determination means for determining which aspect implementations referenced by all found aspect type are available in the software system; and
registering means for registering those aspect types, for which aspect implementations are available, with a registry.

9. System according to claim 8, **characterised in that** the identification means comprises:
means for finding all object types for all aspect objects contained in the aspect object structure; and
means for finding all aspect types referenced from within the object types of said aspect objects.

10. System according to claim 8 or 9, **characterised in that** the registry is part of an aspect directory of the software system.

11. System according to claim 10, **characterised in that** the aspect directory comprises an object table for entries for the object types, and the registry for the aspect types comprises an aspect table for each object type.

12. System according to any of claims 8 to 11, **characterised in that** if further comprises a structure browser for displaying those aspect objects and those aspects of said aspect objects registered with the aspect directory.

13. System according to any of claims 8 to 12, **characterised in that** said system is a computer program product, the components of which may be loaded at least in part into the main memory of a digital data processing device, and be executed on said digital data processing device.
